# EUROPEAN PATENT SPECIFICATION

(11) **EP 2 958 665 B1**
(45) Date of publication and mention of the grant of the patent: **04.07.2018**
(21) Application number: 14724946.0
(22) Date of filing: 15.04.2014
(51) Int. Cl.: B01D 63/12

(54) **ASSEMBLY INCLUDING SERIALLY CONNECTED SPIRAL WOUND MODULES WITH PERMEATE FLOW CONTROLLER**
ANORDNUNG MIT SERIELL VERBUNDENEN SPIRALWICKELMODULEN MIT PERMEATDURCHFLUSSREGLER
ENSEMBLE COMPRENANT DES MODULES ENROULÉS EN SPIRALE CONNECTÉS EN SÉRIE AYANT UN DISPOSITIF DE RÉGULATION D'ÉCOULEMENT DE PERMÉAT

(30) Priority: 26.04.2013 US 201361816186 P
(43) Date of publication of application: 30.12.2015
(73) Proprietor: Dow Global Technologies LLC, Midland, MI 48674 (US)
(72) Inventor: HOEHN, Kai-Uwe, Copacabana, New South Wales 2251 (AU); GARCIA MOLINA, Veronica, E-08902 L'hospitalet de Llobregat (ES)
(74) Representative: Houghton, Mark Phillip
(86) International application number: PCT/US2014/034061
(87) International publication number: WO 2014/176067

(56) References cited:
- EP-A1- 2 008 705
- WO-A1-02/09855
- WO-A1-03/039708
- WO-A1-2007/146321
- WO-A2-2009/035700
- US-A1- 2007 272 628

## Description

### FIELD

The invention is directed toward assemblies including serially connected spiral modules.

### INTRODUCTION

Spiral wound filtration assemblies are used in a wide variety of fluid separations. In a conventional embodiment, a plurality of spiral wound membrane modules ("elements") are serially arranged and interconnected within a pressure vessel. During operation pressurized feed fluid is introduced into the vessel, successively passes through the individual modules and exits the vessel in at least two streams: concentrate and permeate. Feed fluid flows through the vessel and becomes increasingly concentrated as permeate passes through the individual modules. Simultaneously, feed pressure within the vessel continually decreases due to resistance of the feed spacer and permeate back pressure increases. These effects result in permeate flux imbalances between individual elements that can lead to premature membrane fouling. Permeate flux imbalance reduces the volume of water than can be produced by the assembly without exceeding maximum flux guidelines for individual modules.

A variety of techniques have been used to mitigate these effects. For example:
US 4046685 draws permeate from both ends of the assembly which reduces permeate back pressure; US 5503735 utilizes a downstream flow restrictor to restrict concentrate flow; US 2007/0272628 utilizes a combination of elements having different standard specific flux values to better manage differences in operating conditions across the vessel; WO 2012/086478 utilizes a resistance pipe fixed within the permeate tube of an upstream element to reduce permeate flow; and US 7410581 describes the use of flow restrictors that can be moved to alternative positioned along the permeate tubes of interconnected modules. EP 2008705 A1 discloses a spiral wound assembly that comprises a permeate channel that has at least one flow restriction for increasing the pressure in at least part of the permeate channel.

### SUMMARY

The present invention is directed toward a spiral wound assembly comprising:
i) a pressure vessel comprising a feed inlet, concentrate outlet and permeate outlet, and
ii) a plurality of spiral wound modules, each comprising at least one membrane envelop wound around a permeate tube;
wherein the spiral wound modules are serially arranged within the pressure vessel with a first element of the series positioned adjacent to a first end of the pressure vessel and a last element of the series positioned adjacent to an opposing second end of the pressure vessel;
wherein the permeate tubes of the spiral wound elements are serially connected to form a permeate pathway which is connected to the permeate outlet;
wherein the assembly is characterized by including a flow controller within the permeate pathway between the first and last elements that comprises a variable area orifice that decreases as permeate flow increases.

### BRIEF DESCRIPTION OF THE DRAWINGS

The figures are not to scale and include idealized views to facilitate description. Where possible, like numerals have been used throughout the figures and written description to designate the same or similar features.
Figure 1 is a perspective, partially cut-away view of a spiral wound module.
Figure 2 is a cross-sectional elevation view of an embodiment of the assembly.

### DETAILED DESCRIPTION

The present invention includes spiral wound modules ("elements") suitable for use in reverse osmosis (RO) and nanofiltration (NF). Such modules include one or more RO or NF membrane envelops and feed spacer sheets wound around a permeate collection tube. RO membranes used to form envelops are relatively impermeable to virtually all dissolved salts and typically reject more than about 95% of salts having monovalent ions such as sodium chloride. RO membranes also typically reject more than about 95% of inorganic molecules as well as organic molecules with molecular weights greater than approximately 100 Daltons. NF membranes are more permeable than RO membranes and typically reject less than about 95% of salts having monovalent ions while rejecting more than about 50% (and often more than 90%) of salts having divalent ions - depending upon the species of divalent ion. NF membranes also typically reject particles in the nanometer range as well as organic molecules having molecular weights greater than approximately 200 to 500 Daltons.

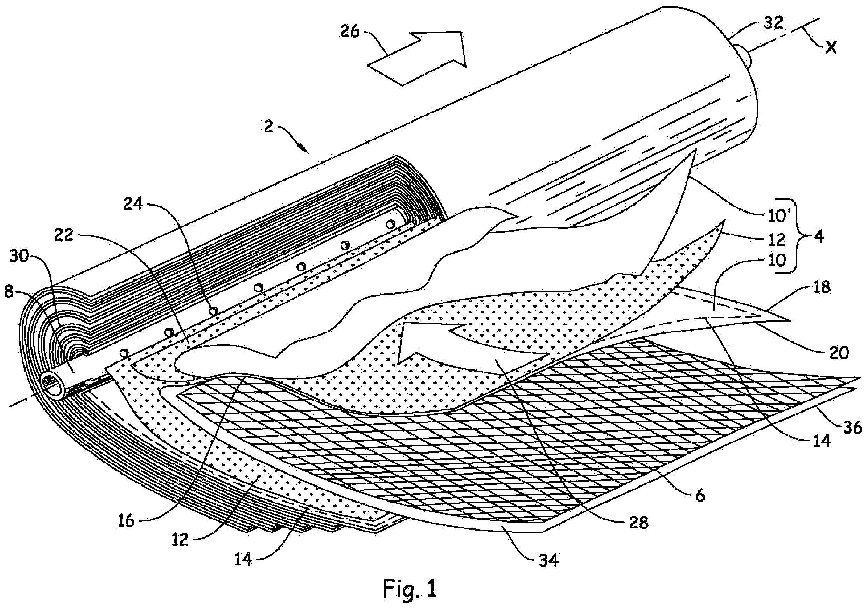

A representative spiral wound filtration module is generally shown in Figure 1. The module (2) is formed by concentrically winding one or more membrane envelopes (4) and feed spacer sheet(s) ("feed spacers ") (6) about a permeate collection tube (8). Each membrane envelope (4) preferably comprises two substantially rectangular sections of membrane sheet (10, 10'). Each section of membrane sheet (10, 10') has a membrane or front side (34) and support or back side (36). The membrane envelope (4) is formed by overlaying membrane sheets (10, 10') and aligning their edges. In a preferred embodiment, the sections (10, 10') of membrane sheet surround a permeate channel spacer sheet ("permeate spacer") (12). This sandwich-type structure is secured together, e.g. by sealant (14), along three edges (16, 18, 20) to form an envelope (4) while a fourth edge, i.e. "proximal edge" (22) abuts the permeate collection tube (8) so that the inside portion of the envelope (4) (and optional permeate spacer (12)) is in fluid communication with a plurality of openings (24) extending along the length of the permeate collection tube (8). The module (2) preferably comprises a plurality of membrane envelopes (4) separated by a plurality of feed spacers sheets (6). In the illustrated embodiment, membrane envelopes (4) are formed by joining the back side (36) surfaces of adjacently positioned membrane leaf packets. A membrane leaf packet comprises a substantially rectangular membrane sheet (10) folded upon itself to define two membrane "leaves" wherein the front sides (34) of each leaf are facing each other and the fold is axially aligned with the proximal edge (22) of the membrane envelope (4), i.e. parallel with the permeate collection tube (8). A feed spacer sheet (6) is shown located between facing front sides (34) of the folded membrane sheet (10). The feed spacer sheet (6) facilitates flow of feed fluid in an axial direction (i.e. parallel with the permeate collection tube (8)) through the module (2). While not shown, additional intermediate layers may also be included in the assembly. Representative examples of membrane leaf packets and their fabrication are further described in US 7875177.

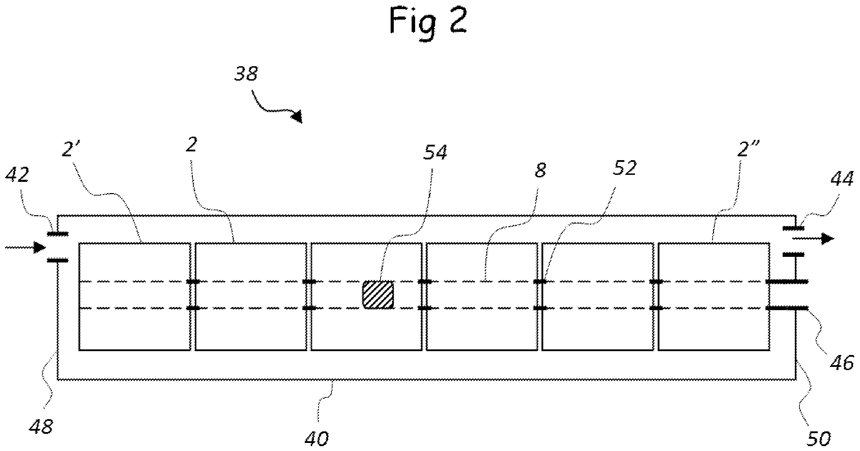

During module fabrication, permeate spacer sheets (12) may be attached about the circumference of the permeate collection tube (8) with membrane leaf packets interleaved there between. The back sides (36) of adjacently positioned membrane leaves (10, 10') are sealed about portions of their periphery (16, 18, 20) to enclose the permeate spacer sheet (12) to form a membrane envelope (4). Suitable techniques for attaching the permeate spacer sheet to the permeate collection tube are described in US 5538642. The membrane envelope(s) (4) and feed spacer(s) (6) are wound or "rolled" concentrically about the permeate collection tube (8) to form two opposing scroll faces (30, 32) at opposing ends and the resulting spiral bundle is held in place, such as by tape or other means. The scroll faces of the (30, 32) may then be trimmed and a sealant may optionally be applied at the junction between the scroll face (30, 32) and permeate collection tube (8), as described in US 7951295. Long glass fibers may be wound about the partially constructed module and resin (e.g. liquid epoxy) applied and hardened. In an alternative embodiment, tape may be applied upon the circumference of the wound module as described in US 8142588. The ends of modules may be fitted with an anti-telescoping device or end cap (not shown) designed to prevent membrane envelopes from shifting under the pressure differential between the inlet and outlet scroll ends of the module. Representative examples are described in: US 5851356, US 6224767, US 7063789 and US 7198719. While not a required aspect of the invention, preferred embodiments of the invention include end caps which include a locking structure for preventing relative axial movement between engaged end caps. Such a locking structure between end caps may be engaged by aligning adjacent end caps so that one or more projections or catches extending radially inward from the inside of the outer hub of one end cap enter corresponding receptacles arranged about the outer hub of the facing end cap. The end caps are then engaged by rotating one end cap relative to the other until the projections or "catches" contact or "hook" with a corresponding structure of the receptacle. This type of locking end cap is available from The Dow Chemical Company under the *iLEC*™ mark and is further described in US 6632356 and US 2011/0042294. If such end caps are not used, interconnecting tubes (as shown in Figure 2) may be used to prevent mixing of permeate with feed. In order to restrict feed fluid from bypassing the elements within the vessel, various types of seals (e.g. Chevron-type, O-rings, U-cup type, etc.) may be positioned between the outer periphery of the elements and the inner periphery of the vessel. Representative examples are described in: US 2011/084455, US 8388842, US 8110016, US 6299772, US 6066254, US 5851267 and WO 2010/090251. In some embodiments, seal assemblies are equipped with a bypass that permits limited feed fluid to flow around the elements, e.g. see US 5128037, US 7208088 and WO 2013/015971.

Materials for constructing various components of spiral wound modules are well known in the art. Suitable sealants for sealing membrane envelopes include urethanes, epoxies, silicones, acrylates, hot melt adhesives and UV curable adhesives. While less common, other sealing means may also be used such as application of heat, pressure, ultrasonic welding and tape. Permeate collection tubes are typically made from plastic materials such as acrylonitrile-butadiene-styrene, polyvinyl chloride, polysulfone, poly (phenylene oxide), polystyrene, polypropylene, polyethylene or the like. Tricot polyester materials are commonly used as permeate spacers. Additional permeate spacers are described in US 2010/0006504. Representative feed spacers include polyethylene, polyester, and polypropylene mesh materials such as those commercially available under the trade name VEXAR™ from Conwed Plastics. Preferred feed spacers are described in US 6881336.

The membrane sheet is not particularly limited and a wide variety of materials may be used, e.g. cellulose acetate materials, polysulfone, polyether sulfone, polyamides, polyvinylidene fluoride, etc. A preferred membrane sheet includes FilmTec Corporation's FT-30™ type membranes, i.e. a flat sheet composite membrane comprising a backing layer (back side) of a nonwoven backing web (e.g. a non-woven fabric such as polyester fiber fabric available from Awa Paper Company), a middle layer comprising a porous support having a typical thickness of about 25-125 µm and top discriminating layer (front side) comprising a thin film polyamide layer having a thickness typically less than about 1 micron, e.g. from 0.01 micron to 1 micron but more commonly from about 0.01 to 0.1 µm. The backing layer is not particularly limited but preferably comprises a non-woven fabric or fibrous web mat including fibers which may be orientated. Alternatively, a woven fabric such as sail cloth may be used. Representative examples are described in US 4,214,994; US 4,795,559; US 5,435,957; US 5,919,026; US 6,156,680; US 2008/0295951 and US 7,048,855. The porous support is typically a polymeric material having pore sizes which are of sufficient size to permit essentially unrestricted passage of permeate but not large enough so as to interfere with the bridging over of a thin film polyamide layer formed thereon. For example, the pore size of the support preferably ranges from about 0.001 to 0.5 µm. Examples of porous supports include those made of: polysulfone, polyether sulfone, polyimide, polyamide, polyetherimide, polyacrylonitrile, poly(methyl methacrylate), polyethylene, polypropylene, and various halogenated polymers such as polyvinylidene fluoride. The discriminating layer is preferably formed by an interfacial polycondensation reaction between a polyfunctional amine monomer and a polyfunctional acyl halide monomer upon the surface of the microporous polymer layer as described in US 4277344 and US 6878278.

Arrows shown in Figure 1 represent the approximate flow directions (26, 28) of feed and permeate fluid (also referred to as "product" or "filtrate") during operation. Feed fluid enters the module (2) from an inlet scroll face (30) and flows across the front side(s) (34) of the membrane sheet(s) and exits the module (2) at the opposing outlet scroll face (32). Permeate fluid flows along the permeate spacer sheet (12) in a direction approximately perpendicular to the feed flow as indicated by arrow (28). Actual fluid flow paths vary with details of construction and operating conditions.

While modules are available in a variety of sizes, one common industrial RO module is available with a standard 8 inch (20.3 cm) diameter and 40 inch (101.6 cm) length. For a typical 8 inch diameter module, 26 to 30 individual membrane envelopes are wound around the permeate collection tube (i.e. for permeate collection tubes having an outer diameter of from about 1.5 to 1.9 inches (3.8 cm - 4.8)). Less conventional modules may also be used, including those described in US 2011/023206 and WO 2012/058038.

The pressure vessels used in the present invention are not particularly limited but preferably include a solid structure capable of withstanding pressures associated with operating conditions. The vessel structure preferably includes a chamber having an inner periphery corresponding to that of the outer periphery of the spiral wound modules to be housed therein. The length of the chamber preferably corresponds to the combined length of the elements to be sequentially (axially) loaded, e.g. 2 to 8 elements, see US 2007/0272628. The pressure vessel may also include one or more end plates that seal the chamber once loaded with modules. The vessel further includes at least one fluid inlet (feed) and two fluid outlets (concentrate and permeate), preferably located at opposite ends of the chamber. The orientation of the pressure vessel is not particularly limited, e.g. both horizontal and vertical orientations may be used. Examples of applicable pressure vessels, module arrangements and loading are described in: US 6074595, US 6165303, US 6299772 and US 2008/0308504. Manufacturers of pressure vessels include Pentair of Minneapolis MN, Bekaert of Vista CA and Bel Composite of Beer Sheva, Israel.

A representative embodiment of the subject assembly is generally shown at 38 in Figure 2, including a pressure vessel (40) with a feed inlet (42), concentrate outlet (44) and permeate outlet (46). The feed inlet (42) is adapted for connection with a pressurized source of feed liquid. The concentrate outlet (42) is adapted for connection to a pathway for re-use or disposal. The permeate outlet (46) is adapted for connection to a pathway for storage, use or further treatment. Six spiral wound modules (2) are serially arranged within the vessel (40) with a first element (2') of the series positioned adjacent to a first end (48) of the pressure vessel (40) and a last element (2") of the series positioned adjacent to an opposing second end (50) of the pressure vessel (40). The permeate tubes (8) of the spiral wound elements are serially connected to form a permeate pathway which is connected to the permeate outlet (46). The means for connecting the tubes (8) of the modules is not particularly limited. For example, interconnecting tubes (52) or end caps (not shown) which typically include pressure fit seals or O-rings are common in the art and are suitable for use in the present invention. While shown including six modules, other quantities may be used, e.g. 2 to 12.

In a preferred embodiment, at least three modules are included within the assembly (38). While shown including only one feed (42), concentrate (44) and permeate (46) outlet, multiple outlets and inlets may be used. In a preferred embodiment, the inlet and outlets are positioned at locations adjacent the ends (48, 50) of the vessel (40). In another embodiment, the assembly (38) includes one feed inlet (42) and one concentration outlet (44) located at the ends (48, 50) of the vessel (40). Further preferred embodiments include removing permeate from only one end of the vessel (40). For purposes of clarity, the "ends" of the vessel includes those portions extending beyond the distal or axial ends of the modules positioned within the vessel. For example, the inlets and outlets may be position on the radial sides of a cylindrical vessel or at an axial position as illustrated in Figure 2.

A flow controller (54) is positioned along the permeate pathway and provides resistance that varies as a function of permeate flow, i.e. increasing resistance as permeate flow increases. "Resistance" (R) is defined as the ratio of pressure drop (Δp) to flow (F), i.e. R=Δp/F. Pressure drop across the flow controller (54) always increases monotonically with flow, but the resistance value is not a constant and can change with flow. The flow controller (54) increases resistance as flow (or pressure drop) across the flow controller (54) increases. In this way, flow across the flow controller can be maintained relatively constant in operation over a desired pressure range. Alternatively stated, the pressure drop can increase by a factor of two, four, oven even ten, with only a 10% change in flow. For example, a 5 GPM flow controller (e.g. model# 2305-1141-3/4 available from O'Keefe Controls Co.) maintains flow within ± %10 of the flow rating as pressure drop ranges between 1 and 10 bar. By retarding flow for modules upstream of the flow controller (54), flux imbalances between different modules within the vessel (40) is reduced. The flow controller includes a compliant member that can deform to cause greater resistance to flow at higher permeate flow rates or greater pressure drops across the flow controller. The flow controller includes an orifice that becomes partially obstructed or changes shape, i.e. narrowing as permeate flow increases and opening as permeate flow decreases.

The degree of pressure drop created by the flow controller may be optimized based upon the characteristics of the assembly, e.g. number of modules, quality of feed liquid, feed operating pressure, etc. In one preferred embodiment, the flow controller creates a drop in permeate pressure of at least 0.6895 bar (10 PSI) when the permeate flow rate upstream from the flow controller is 25,510 liters/m2/hour (15 gfd) x Area, wherein the "Area" is the total membrane area of membrane located upstream from the flow controller (54). The term "upstream" is defined in terms of the direction of permeate flow through the flow controller (54).

In the illustrated embodiment, a single flow controller (54) is shown located between the third and fifth module of the series. In preferred embodiments, the flow controller is located between the first (2') and last (2") module in the series. In embodiments including six modules like that shown, the flow controller is preferably located between the first (2') and fifth module. In another embodiment, the flow controller (54) is located upstream of the third element. While shown at a single fixed location, the flow controller (54) may be selectively moved along the permeate pathway by conventional means, see for example US 7410581. While not shown, the assembly (38) may include a plurality of flow controllers spaced along the permeate pathway, each providing a successive pressure drop.

## Claims

1. A spiral wound assembly comprising:
i) a pressure vessel comprising a feed inlet, concentrate outlet and permeate outlet, and
ii) a plurality of spiral wound modules, each comprising at least one membrane envelop wound around a permeate tube;
wherein the spiral wound modules are serially arranged within the pressure vessel with a first element of the series positioned adjacent to a first end of the pressure vessel and a last element of the series positioned adjacent to an opposing second end of the pressure vessel;
wherein the permeate tubes of the spiral wound elements are serially connected to form a permeate pathway which is connected to the permeate outlet;
wherein the assembly is **characterized by** including a flow controller within the permeate pathway between the first and last elements that comprises a variable area orifice that decreases as permeate flow increases.

2. The assembly of claim 1 wherein the membrane located upstream from the flow controller has a total area (Area), and the flow controller creates a drop in permeate pressure of at least 0.6895 bar (10 PSI) when the permeate flow rate upstream from the flow controller is 25,510 liters/m²/hour (15 gfd) x Area.

3. The assembly of claim 1 comprising at least six spiral wound modules serially arranged within the pressure vessel, and wherein the flow controller is located at a position between the first and fifth elements.

4. The assembly of claim 1 wherein the feed inlet, concentrate outlet and permeate outlet are located at the ends of the pressure vessel.

5. The assembly of claim 1 wherein the pressure vessel comprises a single feed inlet, concentrate outlet and permeate outlet.

## Patentansprüche

1. Eine Spiralwickelanordnung, die Folgendes beinhaltet:
i) einen Druckbehälter, der einen Zufuhreinlass, Konzentratauslass und Permeatauslass beinhaltet, und
ii) eine Vielzahl von Spiralwickelmodulen, die jeweils mindestens eine um ein Permeatrohr gewickelte Membraneinhüllungswicklung beinhalten;
wobei die Spiralwickelmodule innerhalb des Druckbehälters seriell angeordnet sind, wobei ein erstes Element der Serie angrenzend an ein erstes Ende des Druckbehälters positioniert ist und ein letztes Element der Serie angrenzend an ein gegenüberliegendes zweites Ende des Druckbehälters positioniert ist;
wobei die Permeatrohre der Spiralwickelelemente seriell verbunden sind, um einen Permeatpfad zu bilden, der mit dem Permeatauslass verbunden ist;
wobei die Anordnung **dadurch gekennzeichnet ist, dass** sie einen Durchflussregler innerhalb des Permeatpfads zwischen dem ersten und letzten Element umfasst, der eine flächenverstellbare Öffnung beinhaltet, die sich beim Anstieg des Permeatflusses verkleinert.

2. Anordnung gemäß Anspruch 1, wobei die Membran, die sich stromaufwärts des Durchflussreglers befindet, eine Gesamtfläche (Fläche) aufweist und der Durchflussregler eine Senkung im Permeatdruck von mindestens 0,6895 bar (10 PSI) schafft, wenn die Permeatdurchflussrate stromaufwärts des Durchflussreglers 25,510 Liter/m²/Stunde (15 gfd) x Fläche beträgt.

3. Anordnung gemäß Anspruch 1, die mindestens sechs Spiralwickelmodule beinhaltet, die innerhalb des Druckbehälters seriell angeordnet sind, und wobei sich der Durchflussregler an einer Position zwischen dem ersten und fünften Element befindet.

4. Anordnung gemäß Anspruch 1, wobei sich der Zufuhreinlass, Konzentratauslass und Permeatauslass an den Enden des Druckbehälters befinden.

5. Anordnung gemäß Anspruch 1, wobei der Druckbehälter einen einzelnen Zufuhreinlass, Konzentratauslass und Permeatauslass beinhaltet.

## Revendications

1. Un assemblage enroulé en spirale comprenant :
i) un récipient à pression comprenant une entrée d'alimentation, une sortie de concentré et une sortie de perméat, et
ii) une pluralité de modules enroulés en spirale, comprenant chacun au moins une enveloppe de membrane enroulée autour d'un tube de perméat ;
dans lequel les modules enroulés en spirale sont arrangés en série au sein du récipient à pression, un premier élément de la série étant positionné de façon adjacente à une première extrémité du récipient à pression et un dernier élément de la série étant positionné de façon adjacente à une deuxième extrémité opposée du récipient à pression ;
dans lequel les tubes de perméat des éléments enroulés en spirale sont raccordés en série afin de former un passage de perméat qui est raccordé à la sortie de perméat ; l'assemblage étant **caractérisé par** le fait d'inclure un dispositif de contrôle d'écoulement au sein du passage de perméat entre les premier et dernier éléments, lequel comprend un orifice de superficie variable qui diminue à mesure que l'écoulement de perméat augmente.

2. L'assemblage de la revendication 1 dans lequel la membrane située en amont du dispositif de contrôle d'écoulement a une superficie totale (Superficie), et le dispositif de contrôle d'écoulement crée une chute dans la pression de perméat d'au moins 0,6895 bar (10 PSI) lorsque la vitesse d'écoulement de perméat en amont du dispositif de contrôle d'écoulement est de 25 510 litres/m²/heure (15 gfd) x Superficie.

3. L'assemblage de la revendication 1 comprenant au moins six modules enroulés en spirale arrangés en série au sein du récipient à pression, et dans lequel le dispositif de contrôle d'écoulement est situé à une position entre les premier et cinquième éléments.

4. L'assemblage de la revendication 1 dans lequel l'entrée d'alimentation, la sortie de concentré et la sortie de perméat sont situées au niveau des extrémités du récipient à pression.

5. L'assemblage de la revendication 1 dans lequel le récipient à pression comprend une entrée d'alimentation, une sortie de concentré et une sortie de perméat uniques.
